# NEUE EUROPÄISCHE PATENTSCHRIFT

(11) **EP 0 539 696 B2**
(45) Veröffentlichungstag und Bekanntmachung des Hinweises auf die Entscheidung über den Einspruch: **16.08.2001**
(45) Hinweis auf die Patenterteilung: 02.07.1997
(21) Anmeldenummer: 92115094.2
(22) Anmeldetag: 03.09.1992
(51) Int. Cl.: H04B 5/00, E05B 49/00, G07C 9/00

(54) **Verfahren zur berührungslosen Energie- und Datenübertragung**
Method for contactless energy and data transmission
Procédé pour la transmission d'énergie et de données fonctionnant sans contact

(30) Priorität: 17.09.1991 DE 4130904
(43) Veröffentlichungstag der Anmeldung: 05.05.1993
(73) Patentinhaber: SIEMENS AKTIENGESELLSCHAFT, 80333 München (DE); BKS GmbH, D-42549 Velbert (DE)
(72) Erfinder: Beckers, Paul, Dipl.-Ing., W-5161 Merzenich (DE)
(74) Vertreter: Zedlitz, Peter, Dipl.-Inf.

(56) Entgegenhaltungen:
- EP-A- 0 242 906
- DE-A- 2 634 303
- DE-A- 4 100 693
- Jansen Rötter "Telekommunikationstechnik" Europa-Lehrmittelverlag, 1990, Seiten 450 und 451.

## Beschreibung

Die Erfindung betrifft ein Verfahren zur berührungslosen Energie- und Datenübertragung, in einem elecktronisch/mechanisch kodierten Kontrollsystem.

Aus dem Industrie- und Hausbereich sind Verfahren zur berührungslosen Energie- und Datenübertragung bekannt. Die Energieübertragung erfolgt dabei über eine Kopplung mittels Antennenspulen, während die Datenübertragung sowohl elektrisch, z.B. über Modulation einer elektromagnetischen Welle, als auch optisch, z.B. über optoelektronische Elemente, erfolgt.

Diese bekannten Verfahren mittels Antennenkopplung sind jedoch relativ störanfällig, da die Informationsübertragung durch andere Sender, Oberwellen etc. gestört werden kann. Die gesetzlichen Störpegel-Vorschriften führen darüberhinaus zu erheblichen Auslegungseinschränkungen. Eine Informationsübertragung auf optischem Wege hat den Nachteil, daß der Wirkungsbereich, z.B. durch Verschmutzung oder Lagefehler der Übertragungselemente, eingeschränkt ist.

Aus der DE-OS 37 14 195 ist z.B. ein Verfahren zur berührungslosen Energie- und Datenübertragung zwischen einer stromversorgten Hauptelektronik und einer nicht-stromversorgten Teilelektronik mit einer Energiespeicherschaltung über jeweils mit der Haupt- bzw. Teilelektronik verbundene Koppelelemente bekannt. Hierbei sind Haupt- und Teilelektronik jeweils mit einem HF-Oszillator, Modulator, Demodulator und Datenrichtungsschalter ausgestattet. Der Energie- und Datenaustausch wird von einem Microcontroller so gesteuert, daß abwechselnd Energie und Daten über die Koppelelemente übertragen werden und die Startzeitpunkte der Datensequenzen der Teilelektronik mit den Abläufen der Hauptelektronik sychronisiert sind. Der Datenaustausch wird über Datenrichtungsschalter in den jeweiligen Elektroniken gesteuert. Zum Datenaustausch wird eine Ablaufsteuerung in der Teilelektronik benötigt. Diese muß mit der Hauptelektronik synchronisiert werden, was bei Parameteränderungen der verwendeten Bauteile zu Störungen führen kann. Ein weiterer Nachteil besteht darin, daß die Teilelektronik mit eigenem HF-Oszillator und Modulator ausgestattet ist, was den Bauteil - und damit Kostenaufwand erheblich macht. Langzeitprobleme sind nicht auszuschließen.

Aus der Offenlegungsschrift DE-OS 26 34 303 ist z.B. eine elektronische Schließeinrichtung mit Identifikationssystem bekannt, wobei über die in Schloß bzw. Schlüssel vorhandene Spule ein Energieaustausch und wechselseitiger Informationsaustausch berührungslos möglich ist. Bei der bekannten Schließeinrichtung wird ein HF-Oszillator verwendet, der ein Signal hoher Frequenz aussendet, welches verstärkt einer SendeEmpfangsspule zugeführt wird, und in deren Umgebung ein hochfrequentes elektromagnetisches Feld aufbaut. Bei Annäherung eines elektronischen Schlüssels wird in der Sende- und Empfangsspule eine Spannung gleicher Frequenz induziert, wobei diese einerseits zur Energieversorgung und andererseits zur Signalgewinnung weiter verarbeitet wird. Die Rückübertragung von der Schlüsseleinheit zur Schließeinheit erfolgt über eine Belastungsänderung in der Schlüsselelektronik, deren Auswirkung in der Schloßelektronik ausgewertet wird. Bei der bekannten Verfahrensweise ist nachteilig, daß die Energie- und Datenübertragung über eine Kopplung mittels Antennenspu-len erfolgt. Die einzukoppelnde Energie ist aufgrund des begrenzten Energietransports über elektromagnetische Wellen gering und die Übertragung kann leicht durch andere Sender, Oberwellen etc. gestört werden. Weiterhin sind Oszillatorschaltungen äußerst abhängig von den Parameteränderungen ihrer Bauteile. Eine Einzelabstimmung ist erforderlich.

Eine weitere Identifikationslösung wird in der DE-OS 35 00 353 vorgeschlagen, wobei ein Schloß mit einem Detektor und ein Schlüssel mit einem Gegendetektor versehen ist und wobei Detektor und Gegendetektor Sende- und Empfangsteile zweier elektrischer Hochfrequenzschwingkreise sind, die noch aufeinander abgestimmt werden müssen. Derartige Abstimmungen sind kostenaufwendig und haben ein schlechtes Langzeitverhalten.

Der vorliegenden Erfindung liegt die Aufgabe zugrunde, ein verbessertes Verfahren zur berührungslosen Energie- und Datenübertragung in einem elektronisch/mechanisch kodierten Kontrollsystem mit einer stromversorgten elektrischen Primäreinheit mit elektronischer Ansteuerung und einer elektrischen Sekundäreinheit, wobei Primär- und Sekundäreinheit über induktive Koppelelemente gekoppelt sind und wobei die Primäreinheit informationsmodulierte Energieimpulse aussendet, die von der Sekundäreinheit empfangen, dort die Aktivierung einer Elektronik bewirken und informationsabhängige Reaktionen einleiten, die auf die Primäreinheit zurückwirken und deren Rückwirkung ausgewertet wird, anzugeben.

Aus der WO 91/11093 ist das vorstehend beschriebene Verfahren sowie eine Einrichtung zur Durchführung des Verfahrens zur berührungslosen Energie- und Datenübertragung bekannt.

Die Lösung der Aufgabe besteht im wesentlichen darin, daß Energieimpulspakete unter Ausnutzung von Induktionsspannungsstößen generiert werden und der Stromfluß eines schwingfähigen Systems in der Primäreinheit zur Ausnutzung der in dem induktiven Koppelelement auftretenden Induktionsspannungsstöße gesteuert unterbrochen wird.

Der wesentliche Vorteil des erfindungsgemäßen Verfahrens besteht darin, daß in einem Schlüssel-Schlossystem zur Energie- und Datenübertragung Energieimpulspakete unter Ausnutzung von hochenergetischen Induktionsspannungsstößen entstehen. Dabei braucht die Betriebsfrequenz des schwingfähigen Systems sehr vorteilhaft nicht der Resonanzfrequenz zu entsprechen. Ein Abgleich ist nicht erforderlich. Die Übertragung mittels hochenergetischer Impulse ermöglicht auch bei ungünstiger Kopplung, z. B. durch Schmutz, Öl, Lagefehler etc. eine sichere Energie- und Datenübertragung. Lagefehler und Abstand der Koppelelemente werden im Millimeterbereich toleriert.

Eine weitere vorteilhafte Ausgestaltung ist die induktive Kopplung nach dem Prinzip eines Luftspalttransformators. Dadurch werden die Probleme der Abstimmung von HF-Oszillatorschaltungen umgangen. Der Schaltungsaufwand wird kleiner und die Anforderungen an die verwendeten Bauteile in Bezug auf Frequenzstabilität sinken. Das Langzeitverhalten ist sehr gut.

In einer weiteren vorteilhaften Ausgestaltung werden die Energieimpulse nach dem Pulsamplitudenmodulationsverfahren übertragen, das sich besonders für die gleichzeitige Übertragung von Energie und Daten eignet. Eine Halbduplex-Übertragung mit ausschließlicher Ausnutzung positiver Halbwellen bietet dabei den Vorteil, die Empfangsdaten in der Sekundäreinheit auf besonders einfache Weise demodulieren zu können.

Ein weiteres Merkmal wird darin gesehen, daß eine binäre Codierung nach einem Standardcodierverfahren verwendet wird, bei dem auf eine Wertigkeit 0 mindestens eine Wertigkeit 1 folgt. Dadurch wird eine sichere Energieversorgung der Sekundäreinheit ermöglicht, wobei die Energieversorgung in den Austastzeiten über einen energiespeichernden Kondensator erfolgt. Weiterhin wird die Übertragungssicherheit verbessert, da sich bei binärer Codierung ein größerer Störabstand ergibt.

Eine weitere vorteilhafte Ausgestaltung zeichnet sich dadurch aus, daß die Ansteuerung des schwingfähigen Systems über eine, mit der Sendeinformation modulierten, Rechteckimpulsfolge erfolgt. Mit diesem Prinzip läßt sich eine besonders einfache Modulatorschaltung aufbauen, insbesondere kann die Modulation durch ein logisches Element, z.B. ein NAND-Gatter, realisiert werden.

Eine weitere vorteilhafte Ausgestaltung ist, daß zur Informationsübertragung von der Sendeeinheit zurück zur Primäreinheit sekundärseitig eine steuerbare Last entsprechend der Sekundärsendeinformation angesteuert wird, wobei diese Belastungsänderungen transformatorisch zur Primäreinheit übertragen und dort, z. B. über einen Meßwiderstand im schwingfähigen System, ausgewertet werden. Dieses Prinzip hat den Vorteil, daß der Bauteilaufwand der Sekundäreinheit minimiert wird und die Auswertung der Rückwirkung auf die Primäreinheit einfach ist.

Weitere Vorteile und Einzelheiten ergeben sich aus der nachfolgenden Beschreibung eines Ausführungsbeispiels, anhand der Zeichnungen und in Verbindung mit den Unteransprüchen. Es zeigen:
FIG 1 eine Prinzipschaltung der Primäreinheit,
FIG 2 eine Prinzipschaltung der Sekundäreinheit,
FIG 3, 4 und 5 Singalverläufe und
FIG 6 in Primär- und Sekundärkoppelelement.

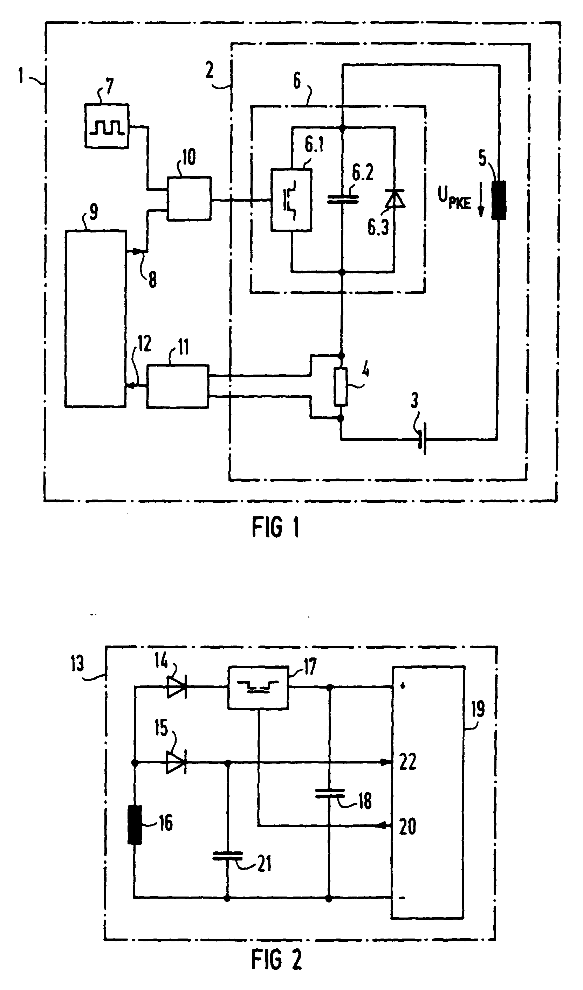

Die Primäreinheit 1 besteht gemäß FIG 1 im wesentlichen aus einem schwingfähigen System 2, realisiert durch die Reihenschaltung von Energiequelle 3, Meßwiderstand 4, Primärkoppelelement 5 und elektronischem Schalter 6. Der elektronische Schalter 6 ist zum besseren Verständnis als Ersatzschaltung dargestellt, wobei diese als Parallelschaltung von Schaltelement 6.1, parasitärer Kapazität 6.2 und Diode 6.3 ausgebildet ist. Der Ausgang eines Rechteckgenerators 7, der z.B. im 100-200 KHz Bereich arbeitet, und der Datenausgang 8 der Ein-Ausgabeelektronik 9 eines übergeordneten Steuersystems, bilden die Eingänge einer logischen Verknüpfungseinheit 10, deren Ausgang mit dem Steuereingang des elektronischen Schalters 6 verbunden ist. Parallel zum Meßwiderstand 4 liegt ein Auswertefilter 11, dessen Ausgang mit dem Dateneingang 12 der Ein- Ausgabeelektronik 9 verbunden ist.

FIG 2 zeigt die Prinzipschaltung der Sekundäreinheit 13 gemäß der Erfindung. Die Dioden 14 und 15 sind anodenseitig mit dem Sekundärkoppelement 16 verbunden. Kathodenseitig liegt die Diode 14 an dem Eingang des elektronischen Schalters 17 der ausgangsseitig mit einem Kondensator 18 und dem positiven Spannungseingang des Microcontrollers 19 verbunden ist. Der Microcontroller weist vorteilhaft ein freiprogrammierbares Speichermittel, z.B. ein EEPROM, auf. Der Steuereingang des elektronischen Schalters 17 ist mit einem Datenausgang 20 des Microcontrollers 19 verbunden. Die Diode 15 ist kathodenseitig mit einem Kondensator 21 und einem Dateneingang 22 des Microcontrollers 19 verbunden. Weiterhin sind die noch offenen Klemmen des Sekundärkoppelelements 16 und der Kondensatoren 18 und 21 mit dem negativen Spannungseingang des Microcontrollers 19 verbunden.

Im folgenden wird die Wirkungsweise der Primareinheit 1 und der Sekundäreinheit 13 beschrieben:

Über das logische Element 10 wird die Rechteckimpulsfolge des Rechteckgenerators 7 mit der binären Sendeinformation moduliert. Liegt das Ausgangspotential des logischen Elementes 10 auf hohem Potential, so wird der elektronische Schalter 6 in den leitenden Zustand versetzt. Von der Energiequelle 3 bewirkt, steigt jetzt der Strom durch das Primärkoppelelement 5 linear an, wodurch dort Energie gespeichert wird. Liegt nun ein niedriges Potential an dem Steuereingang des elektronischen Schalters 6, so wird dieser geöffnet. Das Koppelelement versucht nun den Stromfluß aufrechtzuerhalten und bildet mit der parasitären Kapazität 6.2 des elektronischen Schalters 6 einen Schwingkreis, wobei vorteilhaft zusammenwirkend eine gedämpfte Schwingung entsteht.

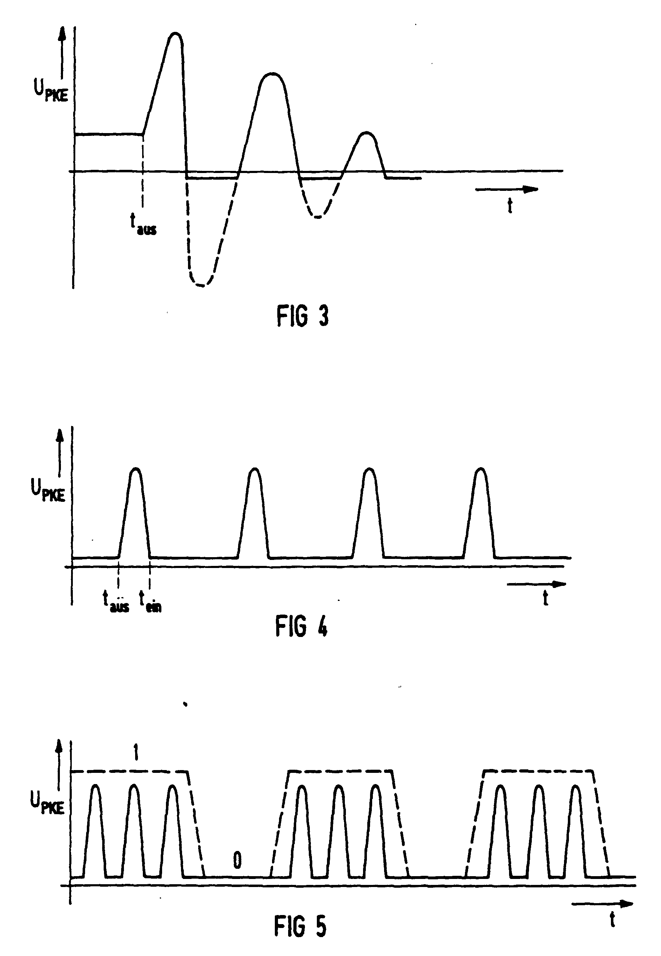

FIG 3 zeigt nun den zeitlichen Verlauf der Induktionsspannung UPKE des Primärkoppelelementes 5. Bis zum Zeitpunkt taus ist die Spannung an dem Koppelelement konstant. Nach dem Zeitpunkt taus ergibt sich eine gedämpfte Schwingung mit der Eigenfrequenz des Schwingkreises, dieses Verhalten ist strichliert dargestellt. Der durchgezogene Spannungsverlauf stellt die positiven Spannungshalbwellen dar, die dadurch entstehen, daß der elektronische Schalter 6 eine Diode 6.3 aufweist. Der negative Anteil, z.B. 0,7 V, ergibt sich aufgrund der Schleusenspannung der Diode 6.3.

FIG 4 zeigt nun den Induktionsspannungsverlauf UPKE des Primärkoppelelementes 5 bei entsprechender Ansteuerung des schwingfähigen Systems 2. Er wird erreicht, indem der elektronische Schalter 6 noch während der negativen Flanke der ersten positiven Halbwelle, z.B. zum Zeitpunkt tein, wieder eingeschaltet wird. Dadurch steigt der Stromfluß im schwingfähigen System 2 wieder linear an. Dies erfolgt in Abhängigkeit vom Takt des Rechteckgenerators 7. Die induzierte Spannungsspitze nach Stromunterbrechnung ist dabei weitgehend konstant und kann typischerweise 200 V betragen. Dies ermöglicht selbst bei ungünstiger Kopplung der Koppelelemente sehr vorteilhaft einen sicheren Energie- und Datentransfer.

FIG 5 zeigt den Induktionsspannungsverlauf UPKE des Primärkoppelelementes bei vorteilhafter Pulsamplitudenmodulation. Die Codierung wird dabei so gewählt, daß auf eine Wertigkeit 0, in der FIG 5 als Spannungsminimum dargestellt, mindestens eine Wertigkeit 1, als Spannungsmaximum dargestellt, folgt. Dadurch ist, wiederum sehr vorteilhaft, die Energieversorgung der Sekundäreinheit auch während der Datenübertragung gesichert.

Das wie vorstehend modulierte Energie/Daten-Signal wird über eine transformatorische Kopplung der beiden Koppelelemente zur Sekundäreinheit 13 übertragen.

Die in dem sekundären Koppelelement 16 induzierte Spannung wird zweifach ausgewertet. Einerseits wird über eine Filterschaltung, bestehend aus Diode 15 und Kondensator 21, die Sendeinformation ausgekoppelt und einem Microcontroller 19 zur Auswertung zugeführt. Andererseits gelangt das Signal über die Diode 14 und einen elektronischen Schalter 17 zu einem Kondensator 18, der aufgeladen wird und somit zur Energieversorgung der Sekundäreinheit 13 dient. Energieeinbrüche, z.B. durch Austastung des Energiestroms bei Wertigkeit 0, werden von dem Kondensator 18 zuverlässig überbrückt.

Die Rückwirkung der Sekundäreinheit 13 auf die Primäreinheit 1 erfolgt über eine Belastungsänderung in der Sekundäreinheit 13. Hierbei wird der elektronische Schalter 17 von dem Microcontroller 19 angesteuert, wodurch sich die Stromaufnahme der Sekundäreinheit 13 entsprechend der zu übertragenden Information ändert. Diese Änderungen können aufgrund der transformatorischen Kopplung zwischen Primär- und Sekundäreinheit, z.B. durch Spannungsänderungen an einem Meßwiderstand 4 im schwingfähigen System 2, erfaßt und ausgewertet werden. Die Verarbeitung des Meßsignals erfolgt in dem Auswertefilter 11, das vorzugsweise als Tiefpaßfilter dritter Ordnung mit Signalgleichrichtung ausgebildet ist.

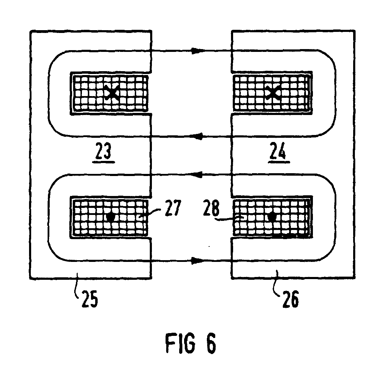

FIG 6 zeigt ein Ausführungsbeispiel eines Primärkoppelelementes 23 und eines Sekundärkoppelelementes 24. Beide sind in ihrer Form und Funktion vorteilhaft identisch. Die Spulenkörper 25, 26 sind als Transformatorkeme ausgeführt. Durch ihre Formgebung, z.B. knopfförmig mit ausgeprägtem Mittel- und Randsteg, wird eine besonders vorteilhafte Flußführung erzielt. Dadurch werden hohe Induktionsdichten und geringe Streuflüsse erreicht, womit eine sichere Kopplung gewährleistet wird. Störende Einflüsse, z.B. durch Verschmutzung oder Lagefehler der Koppelelemente 23, 24 verlieren vorteilhaft an Einfluß. Der Luftspalt zwischen den Koppelelementen 23, 24 kann im Millimeterbereich liegen. Die elektrischen Spulen 27, 28 sind vorteilhaft wirkungsvoll um die Mittelstege der Spulenkörper 25, 26 herum angeordnet.

Insgesamt ergibt sich eine sowohl kompakte als auch unempfindliche (Verschmutzung, Lagefehler etc.) Anordnung die den Ansprüchen eines Schlüssel-Schloßsystems im Industrie- und Hausbereich gerecht wird. Über die Programmierung und Umprogrammierung der Microcontroller, z.B. durch ein übergeordnetes Kontroll- und Leitsystem, ist dabei eine problemlose Anpassung an alle Identifikations- und Kontrollanforderungen, etwa im Hotelbereich, bei Kraftfahrzeugen, in Sicherheitsbereichen oder bei Robotern aller Art möglich.

## Patentansprüche

1. Verfahren zur berührungslosen Energie- und Datenübertragung, in einem elektronisch/mechanisch kodierten Kontrollsystem mit einer stromversorgten elektrischen Primäreinheit (1) mit elektronischer Ansteuerung und einer elektrischen Sekundäreinheit (13), wobei Primär- und Sekundäreinheit (1,13) über induktive Koppelelemente (5,16) gekoppelt sind und wobei die Primäreinheit (1) informationsmodulierte Energieimpulse aussendet, die von der Sekundäreinheit (13) empfangen, dort die Aktivierung einer Elektronik bewirken und informationsabhängige Reaktionen einleiten, die auf die Primäreinheit (1) zurückwirken und deren Rückwirkung ausgewertet wird, wobei zum Energie - und Datenübertragung Energieimpulspakete unter Ausnutzung von Induktionsspannungsstößen generiert werden und der Stromfluß eines schwingfähigen Systems in der Primäreinheit (1) zur Ausnutzung der in dem induktiven Koppelelement (5) auftretenden Induktionsspannungsstöße gesteuert unterbrochen wird und wobei das Verfahren in einem Schlüssel-Schlossystem verwendet wird.

2. Verfahren nach Anspruch 1, **dadurch gekennzeichnet,** daß die induktive Kopplung nach dem Prinzip eines Luftspalttransformators erfolgt.

3. Verfahren nach Anspruch 1 oder 2, **dadurch gekennzeichnet,** daß die Energieimpulse nach dem Pulsamplitudenmodulationsverfahren moduliert werden.

4. Verfahren nach Anspruch 1, 2 oder 3, **dadurch gekennzeichnet,** daß die Energie- und Datenübertragung im Halbduplexverfahren mit ausschließlicher Ausnutzung positiver Halbwellen erfolgt.

5. Verfahren nach Anspruch 1, 2, 3 oder 4, **dadurch gekennzeichnet,** daß eine binäre Codierung verwendet wird, die verhindert, daß zwei Informationseinheiten mit der Wertigkeit 0 aufeinanderfolgen.

6. Verfahren nach Anspruch 5, **dadurch gekennzeichnet,** daß eine binäre Codierung nach einem Standardcodierverfahren verwendet wird, bei dem auf eine Wertigkeit 0 mindestens eine Wertigkeit 1 folgt, z.B. ein Manchester-Code.

7. Verfahren nach Anspruch 1, 2, 3, 4, 5 oder 6, **dadurch gekennzeichnet,** daß die Ansteuerung des schwingfähigen Systems über eine, mit der Sendeinformation modulierten, Rechteckimpulsfolge erfolgt.

8. Verfahren nach Anspruch 7, **dadurch gekennzeichnet,** daß die Modulation der Rechteckimpulsfolge über ein logisches Element, z.B. ein NAND-Gatter, erfolgt.

9. Verfahren nach Anspruch 1, 2, 3, 4, 5, 6, 7 oder 8, **dadurch gekennzeichnet,** daß die sekundärseitige Datenauswertung über ein Gleichrichterelement und eine Kapazität erfolgt, wobei die gewonnenen Daten von einem Microcontroller (19) ausgewertet werden.

10. Verfahren nach Anspruch 1, 2, 3, 4, 5, 6, 7, 8, oder 9, **dadurch gekennzeichnet,** daß die Energieaufnahme in der Sekundäreinheit (13) über ein Gleichrichterelement und eine energiespeichernde Kapazität erfolgt.

11. Verfahren nach Anspruch 1, 2, 3, 4, 5, 6, 7, 8, 9, oder 10, **dadurch gekennzeichnet,** daß zur Informationsübertragung von der Sekundäreinheit (13) zurück zur Primäreinheit (1) sekundärseitig eine steuerbare Last entsprechend der Sekundärsendeinformation beeinflußt wird.

12. Verfahren nach Anspruch 11, **dadurch gekennzeichnet,** daß die sekundäre Belastungsänderung über einen steuerbaren elektrischen Schalter, z.B. einen Transistor, erfolgt.

13. Verfahren nach Anspruch 11 oder 12, **dadurch gekennzeichnet,** daß die sekundären Belastungsänderungen transformatorisch zur Primäreinheit (1) übertragen und dort, z.B. über einen Meßwiderstand (4) im schwingfähigen System, ausgewertet werden.

14. Verfahren nach Anspruch 13, **dadurch gekennzeichnet,** daß das von dem Meßwiderstand (4) abgegriffene Signal tiefpaßgefiltert und von einem Microcontroller (19) ausgewertet wird.

15. Verfahren nach einem der Ansprüche 1 bis 14, **dadurch gekennzeichnet,** daß das Verfahren in einem elektronischen Positions-Identifikationssystem verwendet wird.

## Claims

1. Method for the non-contact transmission of energy and data in an electronically/mechanically coded checking system with a current-fed electrical primary unit (1) with electronic drive means, and an electrical secondary unit (13), where primary unit (1) and secondary unit (13) are coupled via inductive coupling elements (5, 16) and where the primary unit (1) transmits information-modulated energy pulses which are received by the secondary unit (13), activate an electronics unit therein, and initiate information-dependent reactions which act upon the primary unit (1) and the effect of which is evaluated, whereby for the transmission of energy and data, energy pulse packets are generated utilising induction voltage surges, and the current flow of an oscillatory system in the primary unit (1) is interrupted in controlled manner for the utilisation of the induction voltage surges occurring in the inductive coupling element (5), and whereby the method is used in a key-lock system.

2. Method according to Claim 1, characterised in that the inductive coupling takes place in accordance with the principle of an air gap transformer.

3. Method according to Claim 1 or 2, characterised in that the energy pulses are modulated in accordance with the pulse amplitude modulation method.

4. Method according to Claim 1, 2 or 3, characterised in that the energy and data transmission takes place in accordance with the half-duplex method using only positive half-waves.

5. Method according to Claim 1, 2, 3 or 4, characterised in that a binary coding is used which prevents two information units with the value 0 from following one another.

6. Method according to Claim 5, characterised in that a binary coding in accordance with a standard coding method is used, where a value 0 is followed by at least one value 1, for example a Manchester code.

7. Method according to Claim 1, 2, 3, 4, 5 or 6, characterised in that the oscillatory system is driven via a square-wave pulse sequence modulated with the transmitted information.

8. Method according to Claim 7, characterised in that the modulation of the square-wave pulse sequence takes place via a logic element, for example a NAND gate.

9. Method according to Claim 1, 2, 3, 4, 5, 6, 7 or 8, characterised in that the secondary-side data evaluation takes place via a rectifier element and a capacitor, where the acquired data is evaluated by a microcontroller (19).

10. Method according to Claim 1, 2, 3, 4, 5, 6, 7, 8 or 9, characterised in that the energy consumption in the secondary unit (13) takes place via a rectifier element and an energy-storing capacitor.

11. Method according to Claim 1, 2, 3, 4, 5, 6, 7, 8, 9 or 10, characterised in that for the information transmission from the secondary unit (13) back to the primary unit (1), on the secondary side a controllable load is influenced in accordance with the secondary transmitted information.

12. Method according to Claim 11, characterised in that the secondary change in load takes place via a controllable electrical switch, for example a transistor.

13. Method according to Claim 11 or 12, characterised in that the secondary changes in load are inductively transmitted to the primary unit (1) in which they are evaluated, for example via a measuring resistor (4) in the oscillatory system.

14. Method according to Claim 13, characterised in that the signal tapped from the measuring resistor (4) is low-pass-filtered and evaluated by a microcontroller (19).

15. Method according to one of Claims 1 to 14, characterised in that the method is used in an electronic position identification system.

## Revendications

1. Procédé de transfert sans contact d'énergie et de données, dans un système de commande codé de manière électronique /mécanique, comportant une unité (1) primaire électrique alimentée en énergie, ayant une commande électronique, et une unité (13) secondaire électrique, les unités (1, 13) primaire et secondaire étant couplées par l'intermédiaire d'éléments (5, 16) de couplage inductifs et l'unité (1) primaire émettant des impulsions d'énergie qui sont modulées par une information, qui sont reçues par l'unité (13) secondaire, qui y provoquent l'activation d'un dispositif électronique et y provoquent des réactions en fonction de l'information, qui rétroagissent sur l'unité (1) primaire et dont la rétroaction est exploitée, dans lequel, pour un transfert d'énergie et de données, des paquets d'impulsions d'énergie étant générés à cet effet en tirant parti de chocs de tension induite et le flux de courant d'un système pouvant osciller situé dans l'unité (1) primaire étant interrompu en étant commandé pour tirer parti des chocs de tension induite apparaissant dans l'élément (5) de couplage inductif, et dans lequel on utilise le procédé dans un système clef-serrure.

2. Procédé suivant la revendication 1, caractérisé en ce que l'on effectue le couplage inductif suivant le principe d'un transformateur à entrefer.

3. Procédé suivant la revendication 1 ou 2, caractérisé en ce que l'on module les impulsions d'énergie suivant le procédé de la modulation en amplitude des impulsions.

4. Procédé suivant la revendication 1, 2 ou 3, caractérisé en ce que l'on effectue le transfert d'énergie et de données dans le procédé en semi-duplex en utilisant exclusivement des demi-ondes positives.

5. Procédé suivant la revendication 1, 2 ,3 ou 4, caractérisé en ce que l'on utilise un codage binaire qui empêche que deux unités d'information ayant le poids 0 ne se suivent.

6. Procédé suivant la revendication 5, caractérisé en ce que l'on utilise un codage binaire suivant un procédé de codage normalisé, dans lequel il succède à un poids 0 au moins un poids 1, par exemple un code Manchester.

7. Procédé suivant la revendication 1, 2 ,3, 4, 5 ou 6, caractérisé en ce que l'on effectue la commande du système pouvant osciller par l'intermédiaire d'une séquence d'impulsions rectangulaires, modulées par l'information d'émission.

8. Procédé suivant la revendication 7, caractérisé en ce que l'on effectue la modulation de la séquence d'impulsions rectangulaires par l'intermédiaire d'un élément logique, par exemple d'une porte NON-ET.

9. Procédé suivant la revendication 1, 2 ,3, 4, 5, 6, 7 ou 8, caractérisé en ce que l'on effectue l'exploitation de données du côté secondaire par l'intermédiaire d'un élément redresseur et d'une capacité, les données récupérées étant exploitées par un microcontrôleur (19).

10. Procédé suivant la revendication 1, 2 ,3, 4, 5, 6, 7, 8 ou 9, caractérisé en ce que la réception de courant dans l'unité (13) secondaire s'effectue par l'intermédiaire d'un élément redresseur et d'une capacité accumulatrice d'énergie.

11. Procédé suivant la revendication 1, 2 ,3, 4, 5, 6, 7, 8, 9 ou 10, caractérisé en ce que, pour transférer en retour une information de l'unité (13) secondaire à l'unité (1) primaire, une charge pouvant être commandée est influencée du côté secondaire en fonction de l'information d'émission du côté secondaire.

12. Procédé suivant la revendication 11, caractérisé en ce que l'on fait varier la charge du côté secondaire par l'intermédiaire d'un interrupteur électrique qui peut être commandé, par exemple par l'intermédiaire d'un transistor.

13. Procédé suivant la revendication 11 ou 12, caractérisé en ce que les variations de charge du côté secondaire sont transmises par transformateur à l'unité (1) primaire et y sont exploitées, par exemple par l'intermédiaire d'une résistance (4) de mesure se trouvant dans le système pouvant osciller.

14. Procédé suivant la revendication 13, caractérisé en ce que l'on fait passer le signal prélevé par la résistance (4) de mesure par un filtre passe-bas et qu'on l'exploite par un microcontrôleur (19).

15. Procédé suivant l'une des revendications 1 à 14, caractérisé en ce que l'on utilise le procédé dans un système d'identification de position électronique.
